(19) Europäisches Patentamt
European Patent Office
Office européen des brevets

(11) Publication number: 0 472 908 A2

# (12) EUROPEAN PATENT APPLICATION

(21) Application number: 91112432.9

(51) Int. Cl.[5]: C08F 6/04

(22) Date of filing: 24.07.91

(30) Priority: 26.07.90 JP 200693/90

(43) Date of publication of application:
04.03.92 Bulletin 92/10

(84) Designated Contracting States:
DE FR GB IT NL

(71) Applicant: DAIKIN INDUSTRIES, LIMITED
Umeda Center Building 4-12 Nakazaki-nishi
2-chome Kita-ku
Osaka 530(JP)

(72) Inventor: Ohtani, Katsuhide, c/o Yodogawa Works
Daikin Industries Ltd., 1-1, Nishihitotsuya
Settsu-shi, Osaka-fu(JP)
Inventor: Imamura, Hitoshi, c/o Yodogawa Works
Daikin Industries Ltd., 1-1, Nishihitotsuya
Settsu-shi, Osaka-fu(JP)
Inventor: Sakamoto, Takahisa, c/o Yodogawa Works
Daikin Industries Ltd., 1-1, Nishihitotsuya
Settsu-shi, Osaka-fu(JP)
Inventor: Aomi, Hideki, c/o Yodogawa Works
Daikin Industries Ltd., 1-1, Nishihitotsuya
Settsu-shi, Osaka-fu(JP)
Inventor: Takakura, Masaki, c/o Yodogawa Works
Daikin Industries Ltd., 1-1, Nishihitotsuya
Settsu-shi, Osaka-fu(JP)

(74) Representative: Hansen, Bernd, Dr. Dipl.-Chem. et al
Hoffmann, Eitle & Partner Patent- und Rechtsanwälte Arabellastrasse 4 Postfach 81 04 20
W-8000 München 81(DE)

## (54) Removal of low molecular weight fractions of melt processable tetrafluoroethylene copolymers.

(57) Low molecular weight fractions are removed from a polymer comprising extracting a melt processable tetrafluoroethylene copolymer comprising tetrafluoroethylene and at least one ethylenically unsaturated comonomer with a fluorine-containing solvent, whereby moldability, cleanness and mechanical properties of the copolymer are improved.

EP 0 472 908 A2

## BACKGROUND OF THE INVENTION

### Field of the Invention

The present invention relates to a process for removing low molecular weight fractions of a melt processable copolymer comprising tetrafluoroethylene and at least one other ethylenically unsaturated comonomer.

### Description of the Related Art

A copolymer of tetrafluoroethylene and hexafluoropropylene (hereinafter referred to as "FEP") or a copolymer of tetrafluoroethylene and perfluoro(propyl vinyl ether) (hereinafter referred to as "PFA") is a melt processable fluororesin and widely used in electrical, pharmaceutical and semiconductor fields in the form of a wire, a pipe, a tube, a film, a corrosion resistant lining or a wafer carrier by making the best use of its excellent heat resistance, chemical resistance and electrical properties.

Such tetrafluoroethylene copolymer may be prepared by an emulsion polymerization as disclosed in, for example, Japanese Patent Publication No. 20788/1973 or an aqueous suspension polymerization as disclosed in, for example, Japanese Patent Publication No. 36045/1987. In any polymerization method, usually, low molecular weight fractions having a number average molecular weight of about 1000 or less, namely oligomers are more or less by-produced.

The low molecular weight fractions are undesirable since they evaporate during melt molding at high temperature and coagulate on and adhere to a molding die or a film forming roll, or may cause bubbles in a molded article. In addition, the low molecular weight fractions may form particles (dusts) in the semiconductor related fields in which very high cleanness is required. Further, when an amount of the low molecular weight fractions is large, resistance to stress cracking of the molded article tends to be decreased. Hitherto, it has not been tried to remove the low molecular weight fractions from the tetrafluoroethylene copolymer.

The tetrafluoroethylene copolymer which is substantially perfluorinated such as FEP or PFA has extremely good chemical resistance and solvent resistance, since a C-F boding force is large and fluorine atoms surround a C-C bond densely and protect the C-C bond from the attack by other materials. Such polymer is hardly dissolved in a solvent under a normal condition except that it is slightly dissolved in a perfluoroamine or a perluorocarbon at a temperature of 200 °C or higher. As well as the high molecular weight polymer, the oligomers have a very low solubility in a general solvent. Due to such poor solubility, it is believed that the oligomer cannot be removed from the polymer by conventional removing processes, that is a manner in which the oligomer is dissolved in a certain solvent such as washing, extraction, reprecipitation or separation with an ion exchange resin cannot be used.

## SUMMARY OF THE PRESENT INVENTION

An object of the present invention is to provide a process for effectively removing low molecular weight fractions from an already polymerized tetrafluoroethylene copolymer.

According to the present invention, there is provided a process for removing low molecular weight fractions from a polymer comprising extracting a melt processable tetrafluoroethylene copolymer comprising tetrafluoroethylene and at least one ethylenically unsaturated comonomer with a fluorine-containing solvent.

## DETAILED DESCRIPTION OF THE INVENTION

Specific examples of the ethylenically unsaturated comonomer are perfluoro($C_1$-$C_{10}$-alkylethylene), a fluoro(alkyl vinyl ether) of the formula:

$$CF_2{=}CF{-}(O{-}CF_2\underset{\displaystyle CF_3}{\underset{|}{C}F})_a{-}O{-}(CF_2)_b{-}CF_2X \qquad (I)$$

wherein X is a hydrogen atom or a fluorine atom, a is a number of 0 to 4 and b is a number of 0 to 7, or a combination thereof. Among them, hexafluoropropylene, perfluoro(methyl vinyl ether), perfluoro(ethyl vinyl

ether), perfluoro(propyl vinyl ether), perfluoro(butyl vinyl ether),

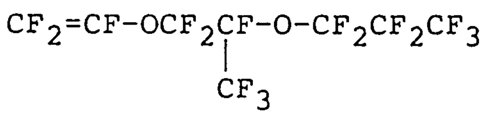 and 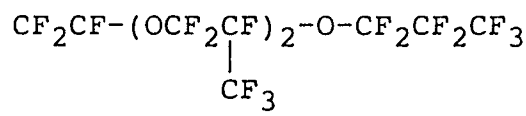

are more preferred.

Examples of the fluorine-containing solvent are compounds having 1 to 5 carbon atom, at least one fluorine atom and optionally at least one atom selected from the group consisting of a chlorine atom, a hydrogen atom, an oxygen atom, a bromine atom and a nitrogen atom, or a mixture thereof.

Preferred examples of the fluorine-containing solvent are $CCl_3F$ (R-11), $CCl_2F_2$(R-12), $CHClF_2$ (R-22), $CCl_2FCCl_2F$ (R-112), $CCl_2FCClF_2$ (R-113), $CClF_2CClF_2$ (R-114), $CHCl_2CF_3$ (R-123), $CH_3CCl_2F$ (R-141b), $CH_3CClF_2$ (R-142b), $CH_2FCF_3$ (R-134a), $CH_3CHF_2$ (R-152a), $CF_3CF_2CH_2OH$,

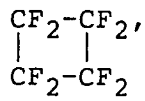

$CCl_3F$ (R-13), $CBrClF_2$, $CBrF_3$, $CF_4$ (R-14), $CHF_3$ (R-23), $CBrF_2CBrF_2$, $CClF_2CF_3$ (R-115), $CF_3CF_3$ (R-116), $CF_3CF_2CHCl_2$ (R-225ca), $CClF_2CF_2CHClF$ (R-225cb), perfluoro(tributyl)amine, and mixtures thereof. Among them, R-113 and R-114 are particularly preferred.

The copolymer to be extracted may be in the form of powder, flakes, cubes, pellets or molded articles. In view of convenience in subsequent filtration to separate the copolymer from the extracted liquid, the pellets are preferred.

To carry out extraction, an autoclave equipped with a temperature regulation jacket and having an outlet for the extracted liquid at its bottom can be used, though other similar container (e.g. a sterilizer) may be used.

An extraction temperature and an extraction solvent may be selected according to the form of the polymer to be extracted. Preferably, the extraction temperature is higher than a boiling point of the solvent.

An extraction time is preferably 10 hours or longer. Preferably, the extraction is carried out under atmospheric pressure or elevated pressure.

A weight or volume ratio of the copolymer to the solvent is not critical. In view of an extraction efficiency, the extraction solvent is used in at least the same weight as the copolymer.

After extraction, the extracted copolymer is separated from the extracted liquid by filtration using, for example, a filter paper, a glass filter or a mesh net. The filtration should be quickly carried out at the extraction temperature after extraction without cooling. If the extracted liquid is cooled, the dissolved low molecular weight fractions are reprecipitated in the form of a solid.

A ratio of the low molecular weight fractions removed by extraction can be calculated by measuring a solid residue (the low molecular weight fractions) which remains after evaporation of the extracted liquid according to the following equation:

$$\text{Removed low molecular weight fractions (wt.\%)} = \frac{\text{Weight of low M. W. fractions after evaporation (kg)}}{\text{Weight of a copolymer to be extracted (kg)}} \times 100$$

According to the present invention, at least 0.001 % by weight of the low molecular weight fractions can be removed based on the weight of the copolymer. As the amount of the removed low molecular weight fractions increases, the properties of the extracted copolymer are improved. Then, preferably, at least 0.01 % by weight of the low molecular weight fractions are removed. In general, a number average molecular weight of the low molecular weight fractions removed by extraction is 1000 or less.

PREFERRED EMBODIMENTS OF THE INVENTION

The present invention will be illustrated by following Examples.

Example 1

Extruded pellets (30.6 kg) each in a cylinder form having a diameter of 2 to 3 mm and a height of 4 mm of a tetrafluoroethylene/perfluoro(propyl vinyl ether) copolymer (PFA) (melt viscosity at 380 °C: 3.0 x $10^4$ poises, perfluoro(propyl vinyl ether content: about 3.5 % by weight) and a fluorine-containing solvent, $CCl_2FCClF_2$ (R-113, boiling point: 47.6 °C) (50.0 kg) were charged in a 160 liter autoclave equipped with an agitator and the autoclave was sealed. A mixture was heated at 80 °C for 15 hours while agitating at 100 rpm, during which the internal pressure of the autoclave rose up to 2.5 kg/cm$^2$G. With keeping the internal temperature at 80 °C, an outlet valve provided at a bottom of the autoclave and having a mesh net therein was gradually opened to transfer the whole volume of the R-113 extracted liquid to a polyethylene container. When R-113 was evaporated off by an evaporator, a white powder (18.3 g) was obtained. The IR spectrum analysis revealed that the white powder consisted low molecular weight fractions of the tetrafluoroethylene/perfluoro(propyl vinyl ether).

From the PFA pellets, 0.06 % by weight of the low molecular weight fractions were removed by extraction.

Then, with the R-113 extracted pellets and non-extracted pellets, a particle elution test was done by dipping them in hydrofluoric acid.

The procedures of the particle elution test are as follows:

In a well washed polyethylene bottle, 50 % hydrofluoric acid (500 g) is charged. The PFA pellets (125 g) were dipped therein and immediately the number of the particles having a diameter of 0.3 µm or larger in hydrofluoric acid is counted using a particle counter (KL-21 manufactured by Rion Co., Ltd.). Also, after 4 days and 16 days from the start of dipping, the number of the particles in the hydrofluoric acid is counted, and an increase ratio is calculated with the number of the particles just after dipping being 1 (one). The results are shown in Table 1.

Table 1

| Dipping days | R-113 extracted pellets | Unextracted pellets |
|---|---|---|
| Just after | 1 | 1 |
| 4 days | 1.05 | 1.59 |
| 16 days | 1.11 | 1.83 |

The results of Table 1 show that the increasing ratio of the particles for the extracted pellets was smaller than that for the unextracted pellets and indicate the effect of the removal of the low molecular weight fractions.

With the R-113 extracted pellets and the unextracted pellets, a heating loss test was done. Procedures of the heating loss test are as follows:

In an aluminum cup, the copolymer pellets (10 g) is weighed and heated in an electric furnace at 380 °C for 3 and 5 hours. After heating, the pellets are cooled to room temperature and weighed. Then, the heating loss ratio of the pellets is calculated.

The results of the heating loss test are shown in Table 2.

Table 2

| Heating loss ratio (%) | R-113 extracted pellets | Unextracted pellets |
|---|---|---|
| After 3 hrs. | 0.017 | 0.022 |
| After 5 hrs. | 0.040 | 0.120 |

The results of Table 2 show that the heating loss ratio of the extracted pellets was smaller than that of the unextracted pellets and reflect the effect of the removal of the low molecular weight fractions.

According to the present invention, the low molecular weight fractions can be easily removed from the hardly soluble tetrafluoroethylene copolymer. The tetrafluoroethylene copolymer from which the low molecular weight fractions have been removed is excellent in moldability, cleanness and mechanical properties. During melt processing, weight loss is small, and no bubbling or adhesion to a mold occurs. Only a small amount of particles (dust) are liberated from the extracted copolymer.

The tetrafluoroethylene copolymer from which the low molecular weight fractions have been removed is advantageously used, in particular, as a wafer carrier in the semiconductor field.

Example 2

Extruded pellets (140 g) each in a cylinder form having a diameter of 2 to 3 mm and a height of 3 to 4 mm of a tetrafluoroethylene/hexafluoropropylene copolymer (FEP) (melt viscosity at 380 °C: 7.0 x $10^4$ poises, hexafluoropropylene content: about 11 % by weight) and R-113 (1300 g) were charged in a 3 liter autoclave and sealed. A mixture was heated at 80 °C for 23 hours, during which the internal pressure of the autoclave rose up to 2.5 kg/cm$^2$G. With keeping the internal temperature at 80 °C, an outlet valve provided at a bottom of the autoclave and having a mesh net therein was gradually opened to transfer the whole volume of the R-113 extracted liquid to a polyethylene container. When R-113 was evaporated off by an evaporator, a white powder (0.018 g) was obtained. The IR spectrum analysis revealed that the white powder consisted of low molecular weight fractions of the tetrafluoroethylene/hexafluoropropylene copolymer.

From the FEP pellets, 0.013 % by weight of the low molecular weight fractions were removed by extraction.

**Claims**

**1.** A process for removing low molecular weight fractions from a polymer comprising extracting a melt processable tetrafluoroethylene copolymer comprising tetrafluoroethylene and at least one ethylenically unsaturated comonomer with a fluorine-containing solvent.

**2.** The process according to claim 1, wherein said ethylenically unsaturated comonomer is at least one selected from the group consisting of perfluoro($C_1$-$C_{10}$-alkylethylene) and a fluoro(alkyl vinyl ether) of the formula:

$$CF_2=CF-(O-CF_2\underset{\displaystyle CF_3}{\underset{|}{CF}})_a-O-(CF_2)_b-CF_2X \qquad (I)$$

wherein X is a hydrogen atom or a fluorine atom, a is a number of 0 to 4 and b is a number of 0 to 7

**3.** The process according to claim 2, wherein said ethylenically unsaturated comonomer is at least one selected from the group consisting of hexafluoropropylene and perfluoro(propyl vinyl ether).

**4.** The process according to claim 1, wherein said fluorine-containing solvent is at least one compound having 1 to 5 carbon atom, at least one fluorine atom and optionally at least one atom selected from the group consisting of a chlorine atom, a hydrogen atom, an oxygen atom, a bromine atom and a nitrogen atom.

5. The process according to claim 4, wherein said fluorine-containing solvent is at least one selected from the group consisting of $CCl_2FCClF_2$ and $CClF_2CClF_2$.